# EUROPEAN PATENT APPLICATION

(11) **EP 4 703 902 A1**
(43) Date of publication of application: **04.03.2026**
(21) Application number: 25198845.7
(22) Date of filing: 28.08.2025
(51) Int. Cl.: G06F 16/25

(54) **STANDARDIZATION OF CODE USING A FILTER FOR PLATFORM MIGRATION**

(30) Priority: 30.08.2024 US 202463689479 P; 30.08.2024 US 202463689493 P
(71) Applicant: ADP, LLC, Roseland New Jersey 07068 (US)
(72) Inventor: KLEIN, Eitan, Roseland, 07068 (US); TATZ, Jessica, Roseland, 07068 (US); AHMED, Mohammed Balal, Roseland, 07068 (US); BAIER, Jonathan, Roseland, 07068 (US)
(74) Representative: Morrall, Jonathan Ian McLachlan

(57) **Abstract**

The technology described herein can provide a platform using one or more protocols to migrate and correct erroneous data. The platform can receive a data structure that includes a plurality of placeholders in accordance with payroll of an entity. The platform can obtain, identify, retrieve, or otherwise receive a template that includes references codes to classify each placeholder within the data structure. Upon classifying each placeholder, the platform can execute a protocol to perform a reverse search and fill the placeholders of the original data structure. For example, the platform can predict values for the placeholders and fill the predicted values for the placeholders' using results of the reverse search associated with the predicted values. The platform can fill the placeholders with actual values to correct the erroneous data structure and transmit the data structure to a migration system.

## Description

### CROSS-REFERENCES TO RELATED APPLICATIONS

This application claims the benefit of priority under 35 U.S.C. § 119 to U.S. Provisional Patent Application No. 63/689,479, filed August 30, 2024, and U.S. Provisional Patent Application No. 63/689,493, filed August 30, 2024, which are hereby incorporated by reference herein in its entirety for all purposes.

### TECHNICAL FIELD

This application is directed to computing technology and, in particular, to the automatic data classification using a protocol.

### BACKGROUND

Computing platforms communicate with various computing engines by transmitting matrices stored within a system of record of the computing platform to the computing engine (e.g., data structures capturing resource information based on rates). In this manner, the computing engine can use data from the computing platform to classify data associated with resource utilization or consumption. However, when receiving matrices from different computing platforms, it can be challenging for the computing engine to process such matrices accurately, reliably, or efficiently due to data inconsistencies and errors. For example, an erroneous data structure (e.g., matrix) that is not properly migrated from one computing platform to another can cause the computing engine to crash, introduce errors, or otherwise result in delays and increased computing latencies during an operation. Furthermore, errors can occur during the migration process, which can stall a computer and waste additional computing resources.

### SUMMARY

Aspects of technical solutions described in this application are directed to automatic data classification using a protocol, thereby providing a more seamless migration process or processing by various computing engines. For example, a system executes a protocol on placeholders within data structures or matrices of data according to a payroll engine to identify values for the placeholders. For example, due to the large number of employees, experts, and workers within an entity, it can be challenging to migrate data between HR platforms that are interconnected to the entity. Manual classification of data for each HR platform can result in a plurality of error, wasted computing resources, and significant overhead of a computing system. Constantly migrating data can lead to excessive utilization of computer resources, memory, and network bandwidth, as well as increased latency or delay during migration.

Technical solutions described herein facilitate systems and methods to provide a platform using one or more protocols to migrate and correct erroneous data. The platform can receive a data structure that includes a plurality of placeholders in accordance with the payroll of the entity. The platform can obtain, identify, retrieve, or otherwise receive a template that includes reference codes to classify each placeholder within the data structure. Upon classifying each placeholder, the platform can execute a protocol to perform a reverse search and fill the placeholders of the original data structure. For example, the platform can predict values for the placeholders and fill the predicted values for the placeholders using results of the reverse search associated with the predicted values. The platform can fill the placeholders with actual values to correct the erroneous data structure and transmit the data structure to a migration system.

Technical solutions described herein further facilitate systems and methods to provide a platform using one or more algorithms to migrate and consolidate data. The platform can receive a data structure that includes a plurality of employees in accordance with the payroll. The platform can select, determine, or otherwise identify a format for the attributes associated with an employee, expert, or client based on the frequency of occurrence of these attributes. Upon selecting the format for the attributes, the platform can transform the data structure to include only the selected formats. For example, the platform can transform the data structure to include a format that has the highest number of occurrences within the data structure. The platform can transmit instructions to a computing device to provide the payroll associated with the selected format of the attributes

Using the platform, the systems and methods described herein can reduce wasted computing resources by efficiently removing placeholders, consolidating data for different HR platforms, and removing duplicated data. Furthermore, the platform can reduce overhead by reducing the number of errors within the data structure to reduce strain on the computing device. In this manner, the platform can increase execution speed by correcting matrices for a migration system.

The systems and methods described herein can improve computer performance by automatically classifying and identifying placeholders within the received erroneous data structure prior to migration to a different computing system or server. In this manner, the platform can reduce the number of cycles spent on error handling and manual data correcting, thereby reducing processing time for various workflows at a respective entity. Furthermore, the automatic classification can cause the platform to implement at least one of the systems and methods described herein to reduce interruptions caused by processing erroneous matrices. By reducing interruptions, the computing system hosting the platform can minimize system stalls and associated latency while improving execution and migration of the matrices.

The systems and methods described herein can optimize resource utilization (e.g., memory, data footprint) by removing erroneous (e.g., erred, duplicate) formats from various matrices, such as payroll matrices, and filing the respective errors with actual values based on data associated with the electronic data source. The correction of the errors allows for clean and standardized data to be stored within the migration system and efficiently processed, thereby reducing the amount of memory (e.g., overhead, disk usage) associated with the migration system and improving efficiency. Furthermore, the correction of the errors based on the replacement of placeholders further reduces data transfer costs for the migration system.

Technical solutions described herein facilitate the platform to be scalable for increasingly large entities while improving the security associated with bulk data transfers. For instance, the platform can provide a standardized format across multiple systems (e.g., human resources, payroll, business administration, etc.). The standardized format can be derived from the automatic classification of placeholders, allowing for large-scale migration without a bottleneck in the migration system or platform. By providing a standardized format, the system and methods described herein can minimize vulnerabilities that can be exploited during a migration, such as buffer overflow, injection, etc.).

Technical solutions described herein facilitate the systems and methods to prevent repeated processing of matrices during migration. For example, processing an erroneous data structure can cause an interrupt or exception to occur in the migration system. The migration system can attempt to process the data structure at a later time, regardless of a correction to the identified errors. However, the automatic detection and classification of errors before migration resolve this issue by correcting the data structure using information associated with an electronic data source. Therefore, allowing the migration system to process the data structure once reduces CPU cycles and saves computing resources by avoiding multiple iterations of processing a faulty data structure. Furthermore, by providing only valid matrices, the systems and methods described herein can eliminate bandwidth requirements for retransmission of the mate.

Technical solutions described herein facilitate the systems and methods to improve system reliability by reducing the number of crashes or bottlenecks at the migration system. This is achieved by the platform implementing the systems and methods described herein to consistently correct matrices without the need for manual intervention by a developer or administrator. In this manner, the systems and methods described herein can boost uptime and reduce system crashes.

An aspect of the technical solutions described herein can be directed to a system for standardizing code. The system can include one or more processors coupled with memory. The one or more processors can receive, from an electronic data source, a data structure including a segment of entities to which resources are electronically transmitted. The one or more processors can identify a plurality of attributes from the segment of entities by using a filter on the data structure. Each attribute of the plurality of attributes can indicate a format used by a computing device to identify a type of resource associated with an entity of the segment of entities. The one or more processors can determine a first frequency of occurrences of a first attribute of the plurality of attributes for the entity in the segment of entities and a second frequency of occurrences of a second attribute of the plurality of attributes for the entity in the segment of entities. The one or more processors can select the format for the first attribute of the entity, based on a determination that the first frequency of occurrences of the first attribute is greater than the second frequency of occurrences of the second attribute. The one or more processors can transmit an instruction to the computing device, responsive to the selection of the format for the first attribute of the entity. The instruction can cause the computing device to electronically transmit the type of resource in accordance with the format for the first attribute of the entity.

The one or more processors can remove the second attribute of the entity, responsive to the first frequency of occurrences of the first attribute being greater than the second frequency of occurrences of the second attribute. The one or more processors can filter the data structure to identify the plurality of attributes from the segment of entities to determine a third frequency of occurrences of a third attribute for the entity in the segment of entities. The one or more processors can select the format for the first attribute of the entity, based on a determination that the first frequency of occurrences of the first attribute is greater than the third frequency of occurrences of the third attribute. The one or more processors can determine a subset of entities of the segment of entities within the data structure. Each subset of entities includes the plurality of attributes satisfying a relevance threshold.

The one or more processors can determine a third frequency of occurrences of a third attribute for the subset of entities and a fourth frequency of occurrences of a fourth attribute for the subset of entities. The one or more processors can select the format for the third attribute of the subset of entities, based on a determination that the third frequency of occurrences of the third attribute is greater than the fourth frequency of occurrences of the fourth attribute. Each entity in the segment of entities corresponds to at least one of employees, workers, experts, and clients. The one or more processors can parse the data structure to obtain the segment of entities, the plurality of attributes of each entity in the segment of entities, and a frequency of occurrences of each attribute of the plurality of attributes. The one or more processors can generate a data structure comprising one or more fields, a first field to maintain the entity, a second field to maintain a list of the plurality of attributes of the entity, and a third field to maintain the frequency of occurrences for each attribute in the plurality of attributes in the list.

Each attribute of the plurality of attributes corresponds to at least one of a post-tax benefit, a pre-tax benefit, a tax fringe benefit, an autopay, or a payroll hierarchy. The one or more processors can generate a report comprising an updated data structure including the selected format for the first attribute for each entity in the segment of entities. The updated data structure is different from the data structure. The one or more processors can transmit the report to the computing device. The one or more processors can generate a dashboard interface for presentation at the electronic data source. The one or more processors can receive a request from the electronic data source through the dashboard interface. The request can include instructions for the computing device.

The one or more processors can execute, using the instructions, a protocol to filter the data structure in accordance with the request. The one or more processors can parse each entity in the segment of entities of the data structure to detect the plurality of attributes associated with each entity. The one or more processors can determine that the first frequency of occurrences of the first attribute is greater than the second frequency of occurrences of the second attribute.

An aspect of the technical solutions described herein can be directed to a method. The method can be performed by one or more processors, coupled with memory. The method can include receiving, from an electronic data source, a data structure comprising a segment of entities to which resources are electronically transmitted. The method can include identifying a plurality of attributes from the segment of entities by using a filter on the matrix. Each attribute of the plurality of attributes indicates a format used by a computing device to identify a type of resource associated with an entity in the segment of entities. The method can include determining a first frequency of occurrences of a first attribute of the plurality of attributes for the entity in the segment of entities and a second frequency of occurrences of a second attribute of the plurality of attributes for the entity in the segment of entities. The method can include selecting the format for the first attribute of the entity, based on a determination that the first frequency of occurrences of the first attribute is greater than the second frequency of occurrences of the second attribute. The method can include transmitting, by the one or more processors, instructions to the computing device, responsive to the selection of the format for the first attribute of the entity. The instruction can cause the computing device to electronically transmit the type of resource in accordance with the format for the first attribute of the entity.

An aspect of the technical solutions described herein can be directed to a non-transitory computer-readable medium that stores processor-executable instructions that, when executed by one or more processors, cause the one or more processors to receive, from an electronic data source, a data structure including a segment of entities to which resources are electronically transmitted. The one or more processors can filter the data structure to identify a plurality of attributes from the segment of entities. Each attribute of the plurality of attributes can indicate a format used by a computing device to identify a type of resource associated with an entity of the segment of entities. The one or more processors can determine a first frequency of occurrences of a first attribute of the plurality of attributes for the entity in the segment of entities and a second frequency of occurrences of a second attribute of the plurality of attributes for the entity in the segment of entities. The one or more processors can select the format for the first attribute of the entity, based on a determination that the first frequency of occurrences of the first attribute is greater than the second frequency of occurrences of the second attribute. The one or more processors can transmit an instruction to the computing device, responsive to the selection of the format for the first attribute of the entity. The instruction can cause the computing device to electronically transmit the type of resource in accordance with the format for the first attribute of the entity.

These and other aspects and implementations are discussed in detail below. The foregoing information and the following detailed description include illustrative examples of various aspects and implementations and provide an overview or framework for understanding the nature and character of the claimed aspects and implementations. The drawings provide illustrations and a further understanding of the various aspects and implementations and are incorporated in and constitute a part of this specification. The foregoing information and the following detailed description and drawings include illustrative examples and should not be considered as limiting.

### BRIEF DESCRIPTION OF THE DRAWINGS

Aspects of the present application are described in the detailed description which follows, in reference to the noted plurality of drawings by way of non-limiting examples of exemplary embodiments of the present application.
FIG. 1 is an illustrative example of a system for standardization of code and correction of matrices, according to an illustrative embodiment;
FIG. 2 is an illustrative example of a data structure with multiple formats, according to an illustrative embodiment;
FIG. 3 is an illustrative example of the data structure with a single format, according to an illustrative embodiment;
FIG. 4 is an illustrative example of a data structure with placeholders, according to an illustrative embodiment;
FIG. 5 is an illustrative example of a data structure with data based on a template, according to an illustrative embodiment;
FIG. 6 is an illustrative example of a method for standardization of code, according to an illustrative embodiment;
FIG. 7 is an illustrative example of a method of correcting a data structure according to an illustrative embodiment.

### DETAILED DESCRIPTION

Aspects of technical solutions described herein are directed to standardizing code using a filter. The system can filter tables of data according to occurrences of attributes associated with employees by averaging values of nearby attributes. For example, due to the volume of employees, experts, and workers within an entity, it can be challenging to migrate data between HR platforms interconnected with an entity. Manually creating a standard format for each HR platform can result in a plurality of errors, wasted computing resources, and significant overhead of a computing system. Constantly migrating data can further result in excess computer resource utilization, memory utilization, network bandwidth consumption, and latency or delay during migration. Thus, aspects of technical solutions disclosed herein are directed to addressing technical challenges associated with data migration on computing infrastructure, whose challenges may be exacerbated by certain types and formats of data that occur in certain platforms.

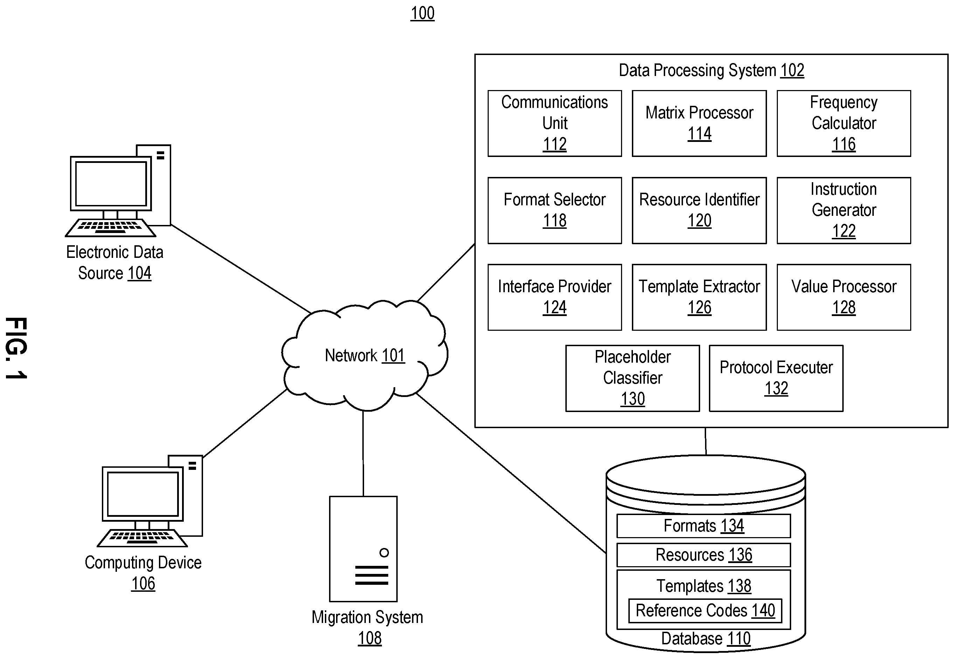

FIG. 1 is an illustrative example of a system 100 for standardization of code and correction of matrices. The system 100 can include at least one data processing system 102, which can include one or more processors coupled with memory. The system 100 can include at least one electronic data source 104 (sometimes referred to as data source 104). The system 100 can include at least one computing device 106. The system 100 can include at least one migration system 108. The system 100 can include at least one database 110. The above mentioned components may be connected to each other through a network 101. The examples of the network 101 may include, but are not limited to, private or public Local-Area Network (LAN), Wireless Local-Area Network (WLAN), Metropolitan-Area Network (MAN), Wide-Area Network (WAN), and the Internet. The network 101 may include both wired and wireless communications according to one or more standards and/or via one or more transport mediums.

The communication over the network 101 may be performed in accordance with various communication protocols such as Transmission Control Protocol and Internet Protocol (TCP/IP), User Datagram Protocol (UDP), and IEEE communication protocols. In one example, the network 101 may include wireless communications according to Bluetooth specification sets, or another standard or proprietary wireless communication protocol. In another example, the network 101 may also include communications over a cellular network, including, e.g., a GSM (Global System for Mobile Communications), CDMA (Code Division Multiple Access), EDGE (Enhanced Data for Global Evolution) network.

The data processing system 102 may be any computing device (e.g., including a server) comprising one or more processors coupled with memory and software and capable of performing the various processes and tasks described herein. The data processing system 102 may be situated, located, or otherwise associated with at least one computer system. The computer system may correspond to a data center, a branch office, or a site at which one or more computers corresponding to the data processing system 102 are situated.

The data processing system 102 can include at least one communications unit 112 that can facilitate communications, or otherwise interface with, one or more components of the data processing system 102 or the system 100. The data processing system 102 can include at least one matrix processor 114 designed, constructed, and operational to modify, analyze, or otherwise process matrices received from the electronic data source 104 or the computing device 106. The data processing system 102 can include at least one frequency calculator 116 designed, constructed and operational to calculate a number or frequency of occurrences of attributes within a data structure (e.g., matrix). The data processing system 102 can include at least one format selector 118 designed, constructed, and operational to select, identify, or otherwise determine a format for the attributes within the data structure. The data processing system 102 can include at least one resource identifier 120 designed, constructed, and operational to identify, determine, or otherwise access resources to be electrically transmitted to a segment of entities. The data processing system 102 can include at least one instruction generator 122 designed, constructed, and operational to generate, create, or otherwise provide instructions to be transmitted to the computing device 106 using the communications unit 112. The data processing system 102 can include at least one interface provider 124 designed, constructed, and operational to generate, provide, or otherwise display a user interface on the computing device 106. The data processing system 102 can include at least one template extractor 126 designed, constructed, and operational to extract, retrieve, or otherwise obtain templates 138 from the database 110. The data processing system 102 can include at least one value processor 128 designed, constructed, and operational to calculate, generate, or otherwise determine values for one or more reference codes 140 of the template 138. The data processing system 102 can include at least one placeholder classifier 130 designed, constructed, and operational to identify, classify, or otherwise determine the placeholders within the data structure. The data processing system 102 can include at least one protocol executer 132 designed, constructed, and operational to execute, apply, or otherwise run a protocol (e.g., filter) on the data structure. The communications unit 112 can receive, transmit, or otherwise process signals from the components (e.g., electronic data source 104, computing device 106, migration system 108) via the network 101.

The electronic data source 104 and the computing device 106 of the system 100 can include hardware and software components configured to perform the various processes and tasks described herein, including one or more processors or software comprising machine-executable instructions executed by the one or more processors. Non-limiting examples of such computing devices 106 of the system 100 include server computers, laptop computers, desktop computers, tablet computers, and smartphone mobile devices, among others. The computing devices 106 can execute webserver software for hosting one or more webpages according to web-related or data-communications protocols and computing languages.

The migration system 108 can be implemented using Online Analytical Processing (OLAP) (e.g., technology behind Business Intelligence (BI) applications). OLAP is a powerful technology for data discovery, including capabilities for report viewing, complex analytical calculations, and predictive "what if" scenario (budget, forecast) planning. This provides the ability to analyze payroll runs by leveraging an automatic ability to search for abnormalities in the input data. The migration system 108 can, for example, measure the value of a direct method to reconcile payroll data from a computing engine (e.g., a payroll engine) to a computing platform (e.g., human resource platform). The migration system 108 can protect data using network authentication protocols, e.g., Kerberos. This is designed to provide strong authentication for client/server applications by using secret-key cryptography. Also, for additional security, the systems described herein do not store any Sensitive Personal Information (SPI).

The database 110 can include one or more hardware memory devices to store binary data, digital data, or the like. The database 110 can include one or more electrical components, electronic components, programmable electronic components, reprogrammable electronic components, integrated circuits, semiconductor devices, flip flops, arithmetic units, and the like. The database 110 can include at least one of a non-volatile memory device, a solid-state memory device, a flash memory device, and a NAND memory device. The database 110 can include one or more addressable memory regions disposed on one or more physical memory arrays. A physical memory array can include a NAND gate array disposed on, for example, at least one of a particular semiconductor device, integrated circuit device, or printed circuit board device.

The database 110 can include formats 134, resources 136, and templates 138. The formats 134 can correspond to the plurality of attributes. For instance, each attribute can correspond to a respective format 134 for a data structure. The resources 136 can indicate tax benefits, payroll, hourly rate, salary, employee information, among others associated with the fields of the data structure. The templates 138 can correspond to received matrices by indicating reference codes 140 for each field of the template 138.

The system 100 is not confined to the components described herein and can include additional or alternate components, not shown for brevity, which are to be considered within the scope of the embodiments described herein.

Still referring to FIG. 1, among others, the data processing system 102 can include an interface provider 124 designed, constructed and operational to generate and provide a dashboard interface for presentation at the electronic data source 104. The dashboard interface can be presented on a user interface of the electronic data source 104. For example, the interface provider 124 can generate the dashboard interface for presentation at the electronic data source 104. The dashboard interface can include one or more actionable objects that when selected, transmit a request to the data processing system 102. The request can include instructions to filter the data structure as described herein. The dashboard interface can provide the request over a system bus for reception by the communications unit 112.

The communications unit 112 can receive the request from the electronic data source 104. The request can include authorization criteria analyzed by the communication unit 112 to approve or disapprove the reception of the data structure. The authorization criteria can include client login credentials, employee credentials, entity data, data structure information, description of the data structure, among others. For example, a user of the electronic data source 104 can transmit a request to the communications unit 112 including an employee badge number. The communications unit 112 can verify the employee badge number and allow the user of the electronic data source 104 to transmit the data structure.

Once the communication unit 112 receives the request from the electronic data source 104, the communication unit 112 can execute a protocol on the request. The protocol can be configured to, for example, extract the data structure from within the request, filter the data structure, and process the data structure to remove one or more errors detected. The protocol can be an algorithm, a process, or a formula to trigger the components of the data processing system 102 as described herein. The communication unit 112 can execute the protocol on the request to extract the data structure allowing for the communication unit 112 to receive the data structure from the electronic data source 104.

The communications unit 112 can receive a data structure from the electronic data source 104. The data structure can be an excel document, a word document, a Microsoft list, a portable document format (PDF), a data structure, a report, among others. For example, the electronic data source can transmit an excel document to the data processing system 102 via the communications unit 112. In another example, the electronic data source 104 can transmit a word document to the data processing system 102 via the communications unit 112. The electronic data source 104 can upload the data structure onto an application or a web based application generated by the interface provider 124. For example, the interface provider 124 can generate an application for display on the electronic data source 104. Using the application, the electronic data source 104 can transmit the data structure to the data processing system 102 via the communications unit 112.

The data structure can include a segment of entities for resources 136 to be electronically transmitted. The segment of entities can correspond to a plurality of employees, workers, experts, clients, or specialists included on the payroll of an entity, company, business, and the like. For example, the segment of entities can correspond to the employees within a company. In another example the segment of entities can correspond to the specialist within HR at a company. The resources 136 can be at least one of a salary, hourly wages, bonuses, severance pay, insurance benefits, tax benefits, among others. For example, the data structure can indicate that a first employee received a 401K Flat compensation, whereas another employee receives a standard 401K compensation. Each of the segment of entities can operate at least one of the computing devices 106.

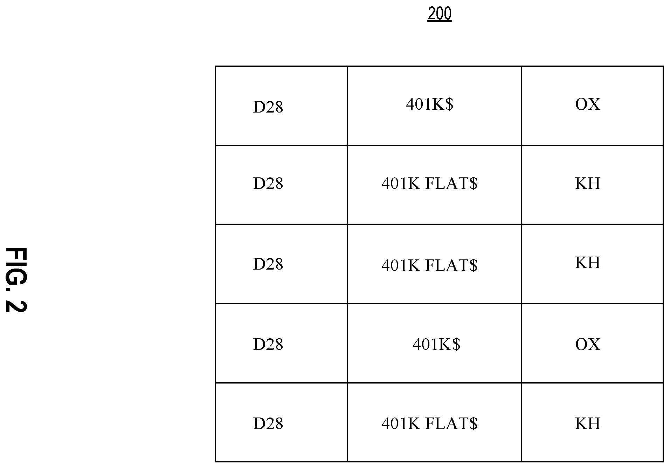

The matrix processor 114 can filter the data structure. For example, the matrix processor 114 can filter the data structure responsive to, upon, or subsequent to the communications unit 112 receiving the data structure. The matrix processor 114 can filter the data structure by processing each element within the data structure (e.g., row/column fields of an excel document) to extract data. For example, the matrix processor 114 can apply signal filtering to the data structure to display remove unwanted elements in the data structure (e.g., elements not associated with payroll). In another example, the matrix processor 114 can apply a box filter to the data structure. The box filter can be configured to apply weights to values within the data structure. For example, the box filter can apply equal weights to values or samples within a square region (or other shaped region) within the data structure, while not weighting or applying a different weight (e.g., lower weight) to values or samples outside the region of the data structure. The box filter can identify attributes associated with the segment of entities. The attributes associated with the segment of entities can correspond to a type of resource 136 based on the format of the attribute. The type of resource 136 include payroll, tax benefits, insurance benefits, and the like. Attributes with different formats can correspond to the same type of resource 136 as shown in FIG. 2.

FIG. 2 is an illustrative example of a data structure 200 with multiple formats 134. The data structure 200 can include the segment of entities (sometimes referred to as D28), the type of resource 136 and the attribute including the format 134 (e.g., OX, KH). In the data structure 200, the attributes for the segment of entities include a different format, however, are mapped to the same type of resource 136 (e.g., 401K). Therefore, the data structure 200 include a plurality of extra elements for D28 despite corresponding to the same type of resource 136. In this manner, the data processing system 102 or computing devices of the data processing system 102 can include increased overhead and utilization due to the increased size of the data structure 200 containing attributes mapped to the same type of resource 136. Using the technical solution described herein, the system 100 can generate attributes in uniform format 134 for the computing device 106 and the electronic data source 104 and reduce overhead of the data processing system 102. While the data structure 200 is shown with five rows, the data structure 200 can be displayed with a plurality of rows based on the size of the company associated with the data structure 200.

Referring back to FIG. 1, among others, the matrix processor 114 can identify the plurality of attributes from the segment of entities by applying the box filter to the data structure 200. For example, by applying the box filter to the data structure 200, the matrix processor can identify the attributes in the format 134 that identity the type of resource 136. In some embodiments, the data structure processor 114 can parse each entity in the segment of entities of the data structure to detect the plurality of attributes associated with each entity. The format 134 of the attribute can be used by the computing device 106 to electrically transmit the resource 136 to the respective entity or employee. For example, the computing device 106 can determine that the attribute corresponds to a payroll resource 136 for an employee.

The matrix processor 114 can determine a subset of entities within the segment of entities that include the plurality of attributes that satisfy a threshold, for example while applying the filter. The threshold can indicate a level of similarity between the attributes of each entity within the subset of entities. When one or more entities include similar attributes that satisfy the threshold, (e.g., 401K, post medical tax benefit, etc.) the matrix processor 114 can form the subset based on each entity within the data structure. For example, a first entity, a second entity, and a third entity can include an attribute that has the format "KH" and correspond to a 401K FLAT. From here, the matrix processor 114 can create a subset of entities that include the first entity, the second entity, and the third entity.

The matrix processor 114 can determine a frequency of occurrence for each attribute for a respective entity in the segment of entities. For example, the matrix processor 114 can determine a frequency of occurrence for each attribute for a respective entity in the segment of entities, responsive to, upon, or subsequent to the matrix processor 114 identifying the plurality of attributes. The frequency of occurrence can be a value that indicates the number of occurrences of an attribute in the data structure 200. For example, in the data structure 200, the attribute KH includes a higher frequency of occurrence than the attribute OX. To determine the frequency of occurrence, the matrix processor 114 can identify formats 134 of the attributes that are the same within the data structure 200. To identify the formats 134, the matrix processor 114 can parse the attributes to analyze the alphanumeric values and order of values that create the format 134. Upon identification of the formats, the matrix processor 114 can generate a list or a data structure for each identified format within the data structure 200.

Upon identifying the formats, the matrix processor 114 can trigger the frequency calculator 116 to calculate the frequency of occurrence for each attribute of an entity. For each identified format of the attributes that are the same, the frequency calculator 116 can increase the frequency of occurrence by 1. For example, the matrix processor 114 can identify a first attribute of an employee and a first format 134 for the attribute. For each first format 134 in accordance with the attribute of the employee in the data structure 200, the frequency calculator 116 can increase the frequency of occurrence by 1. Upon completion of the first format 134, the frequency calculator 116 can transmit the result to the matrix processor 114. The matrix processor 114 and the frequency calculator 116 can iteratively complete this process for each attribute within the data structure 200. The matrix processor 114 can store, house, or otherwise maintain an association between the frequency of occurrence and the respective format 134. The association can be in a data structure, such as, a linked list, an array, a hash, among other data structures.

The frequency calculator 116 can transmit each frequency of occurrence to the format selector 118. Using each frequency of occurrence, the format selector 118 can determine the greatest frequency of occurrence for at least one attribute in the plurality of attributes. The format selector 118 can compare the frequency of occurrence of a first attribute with the frequency of occurrence of a second attribute by using the associations. For example, the frequency of occurrence for "KH" in data structure 200 can be three, whereas the frequency of occurrence for "OX" can be two. Therefore, the format selector 118 can select the format "KH" because it has the greater frequency of occurrence. In another example, a data structure can include a plurality of entities with a corresponding plurality of attributes. For each attribute, the matrix processor 114 can identify at least three formats 134. From here, the frequency calculator 116 can iteratively calculate the frequency of occurrence for each format 134. Upon completion of the calculation of each format 134, the format selector 118 can compare the frequency of occurrence of each format 134. For each comparison, the format selector 118 can mark, label, or flag the respective format 134 that has a greater frequency of occurrence when compared to a subsequent format 134. Once each format 134 is compared, the format selector 118 can select the format 134 with the greatest frequency of occurrence in comparison to the formats 134 of other attributes. In this manner, the data processing system 102 can select the format for the entity regardless of the size of the data structure.

In a non-limiting example, a data structure can include three attributes (e.g., DKH, DOH, and NULL) associated with an entity (e.g., D32). The matrix processor 114 can identify the entity to be D32 and identify DKH, DOH, and NULL in associated with D32 within the data structure. The matrix processor 114 can identify the format by parsing each attribute to analyze the alphanumeric values and order of values that create the format 134. For instance, the matrix processor 114 can identify the first attribute as including "D" appended to "K" appended to "H" and iteratively complete this process for each attribute to define the format 134. Upon completion the matrix processor 114 can trigger the frequency calculator 116 to iteratively calculate the frequency of occurrence for each format 134 and label each format 134 with the respective frequency of occurrence. For instance, a sample output of the labeling by the frequency calculator 116 can be "DKH-4," "DOH-2," and "NULL-2." From here, the frequency selector 118 can compare each frequency of occurrence and label the format with the greater frequency of occurrence. For instance, the frequency selector 118 can compare "DKH-4" and "DOH-2" to identify the greater frequency of occurrence. The frequency selector 118 can iteratively perform this process for each attribute. Upon completion, the format selector 118 can select the format 134 with the greatest frequency of occurrence associated with the attribute (e.g., "DKH-4") for the entity (e.g., "D32").

The matrix processor 114 can determine the subset of entities based on the plurality of attributes satisfying the threshold. From here, the frequency calculator 116 can calculate a frequency of occurrence for the attributes associated with each subset of entities. For example, the frequency calculator 116 can calculate a first frequency of occurrence for an attribute associated with a first subset of entities that is higher than a second frequency of occurrence for an attribute associated with a second subset of entities. From here, the format selector 118 can select the format 134 of the attribute associated with the first subset of entities.

In some embodiments, the matrix processor 114 can generate a data structure that includes one or more fields. The data structure can be an array, a table, a linked list, a hash map, a bag, a tree, and the like. To generate the data structure, the matrix processor 114 can parse the data structure to obtain the segment of entities the plurality of attributes of each entity in the segment of entities, and a frequency of occurrence for each attribute of the plurality of attributes. Once obtained, the matrix processor 114 can use a first field of the data structure to maintain the respective entity, a second field of the data structure to maintain a list of the plurality of attributes of the entity, and a third field to maintain the frequency of occurrences for each attribute in the plurality of attributes in the list. Once generated, the matrix processor 114 can use the communications unit 112 to transmit the data structure to the computing device 106 or the electronic data source 104.

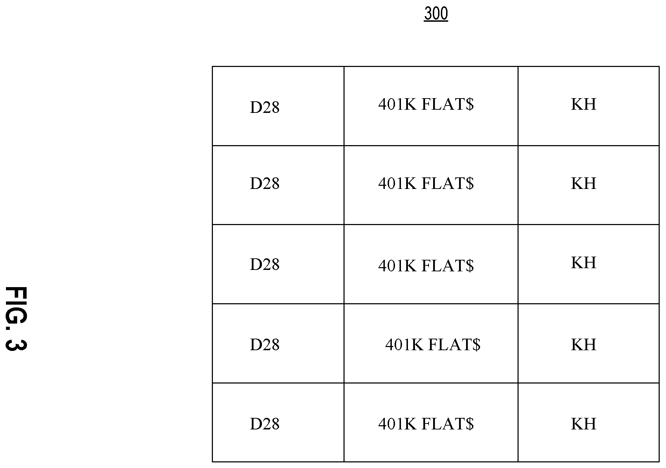

Responsive to selecting the format 134, the format selector 118 can replace the format 134 of each attribute to include the selected format 134. In this manner, the system 100 can create a uniform format 134 for the data structure 200 as shown in FIG. 3. FIG. 3 is an example of the data structure 300 with the selected format 134. By creating the uniform format 134, the data processing system 102 can consume fewer computing resources by using cache memory to process the data structure 300 because each attribute within the data structure 300 includes the same format and association to the same segment of entities. Thereby, enabling a computing device 106 or computing system to exploit temporal locality and spatial locality to avoid processing each entity within the data structure 300. In this manner, using the system described herein, a data center can process subsets of the data structure 300 that correspond to the same entity faster than conventional data extraction and data structure parsing.

The format selector 118 or the matrix processor 114 can remove the non-selected formats 134 from the data structure 300, such as during the replacement of the format 134 of each attribute. By removing the non-selected formats 134, the data processing system 102 can save computing resource overhead (e.g., memory utilization) by no longer storing excess or unused formats 134 associated with the entity. For example, the format selector 118 can flag each format that does not include the greatest frequency of occurrence. Once flagged, the matrix processor 114 can delete, erase, otherwise remove the formats 134 of attribute that does not include the highest frequency of occurrence and replace the removed format 134 with the selected format 134.

The format selector 118 can trigger the instruction generator 122 to generate an instruction for a computing device 106. The instruction can cause the computing device 106 to transmit the type of resource 136 associated with the selected format 134. The instruction can be a signal, a data packet, a trigger, a flag, among others, that, when received by the computing device 106, causes the computing device 106 to prepare to transmit the resource 136 to the respective entity. For example, the instruction can cause the computing device 106 to provide a tax benefit to the employee. In another example, the instruction can cause the computing device 106 to provide a salary to the employee. Once the instruction is generated, the instruction generator 122 can transmit the instruction to the communication unit 112. The communication unit 112 can embed the instruction within a data packet and transmit the instruction to the computing device 106.

Prior to transmitting the instructions, the matrix processor 114 can generate an electronic or digital report for display at the computing device 106. The report can include an updated data structure that is different from the received data structure. The updated data structure can include the selected format for each attribute of each entity in the segment of entities. The matrix processor 114 can update the data structure for each selected format 134 of each attribute. The report can include the received data structure to show one or more differences associated with the updated data structure and the received data structure. For example, the report can include a comparison of the received data structure and the updated data structure. The comparison can include a difference in size of the matrices, a difference in the number of formats of attributes, the number of entities, among others. Using the report, the computing device 106 can observe and verify the improvements within the updated data structure. Once the report is generated, the matrix processor 114 can use the communications unit 112 to transmit the report to the computing device 106.

The matrix processor 114 can generate and provide the report on or via an interactive graphical user interface of the computing device 106. For example, the matrix processor 114 can trigger the interface provider 124 to generate an interactive graphical user interface. The interactive graphical user interface can display the updated data structure of the report with one or more actionable objects to interpret, ingest, or implement feedback from the computing device 106. The actionable objects can include at least one of buttons, widgets, input fields, sliders, switches, gestures, panels, among others. The interface provider 124 can gather interactions with the one or more actionable objects as feedback from the computing device 106. For example, the interactive graphical interface can include a slider to adjust the one or more weights of the report. In another example, the interactive graphical interface can include a button to increase or decrease one or more weights associated with the report. The one or more weights can correspond to the size, data fields, formats, attributes, among others, of the updated data structure. From here, the interface provider 124 can generate feedback using the one or more weights and provide a response to the matrix processor 114. Using the feedback from the interface provider 124, the matrix processor 114 can further update the data structure and generate a new report of for transmission to the computing device 106.

The communications unit 112 can receive a data structure from the electronic data source 104. In this context, the electronic data source 104 can correspond to a new customer, new client, or new company interfacing with the owner of the system 100. The data structure can be an excel document, a word document, a Microsoft list, a portable document format (PDF), a data structure, a report, among others. For example, the electronic data source can transmit an excel document to the data processing system 102 via the communications unit 112. In another example, the electronic data source 104 can transmit a word document to the data processing system 102 via the communications unit 112. In some embodiments, the electronic data source 104 can upload the data structure onto an application or a web based application generated by the interface provider 124. For example, the interface provider 124 can generate an application for display on the electronic data source 104. Using the application, the electronic data source 104 can transmit the data structure to the data processing system 102 via the communications unit 112.

In some embodiments, the communications unit 112 can receive a request from the electronic data source 104. The request can include authorization criteria analyzed by the communication unit 112 to approve or disapprove the reception of the data structure. The authorization criteria can include client login credentials, employee credentials, entity data, data structure information, description of the data structure, among others. For example, a user of the electronic data source 104 can transmit a request to the communications unit 112 including an employee badge number. The communications unit 112 can verify the employee badge number and allow the user of the electronic data source 104 to transmit the data structure.

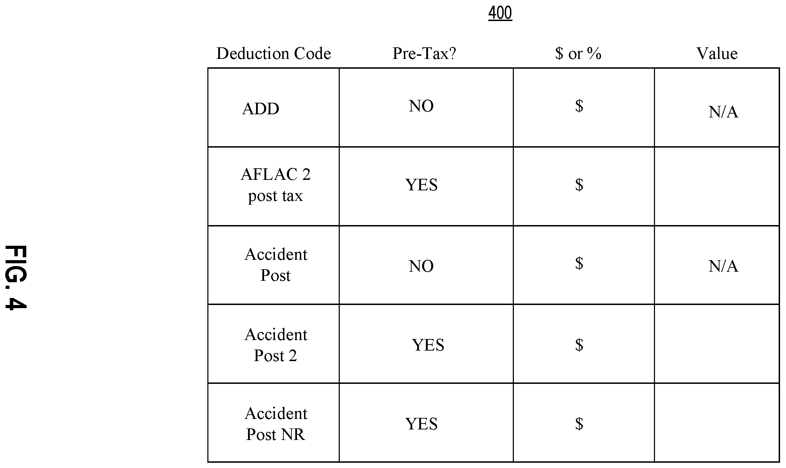

The data structure can include a plurality of placeholders which can indicate errors. The plurality of placeholders can correspond to a NULL, an empty, or a temporary value within the data structure ash shown in FIG. 4. FIG. 4 is an illustrative example of the data structure 400 with placeholders. Within the context of data structure 400, the data structure 400 can include deduction codes, pre-tax benefits (e.g., Health Insurance, retirement contributions, Flexible Spending Accounts, Health Savings Accounts, etc.), $ or % for the pre-tax benefits, and a value of the pre-tax benefits. For ease of description, the data structure 400 can include a plurality of fields that include other deduction codes, entities (e.g., worker, administrator, business, company, etc.), salary, post-tax benefits (e.g., Life Insurance Premium, Roth 401(k) Contributions, Disability Insurance Premiums, etc.), hourly wage, insurance policies (e.g., dental insurance, life insurance, vision insurance, etc.), tax-fringe benefits (e.g., bonuses, Expense Reimbursement, Wellness Programs, etc.), an autopay (e.g., Automated Payroll processing, Tax Calculation, etc.), a payroll hierarchy (e.g., top level management, payroll manager, payroll administrators, etc.), among others. In the data structure 400, the value can include a temporary value or a data field that is empty. When empty, a computing device 106 cannot interpret or process the fields within the data structure 400. Therefore, causing a delay and wasting computing resources when processing the data structure 400. Each placeholder can indicate the types of resources 136 electronically transmitted to the segment of entities. The types of resources 136 include payroll, tax benefits, insurance benefits, and the like.

To identify the plurality of placeholders, the matrix processor 114 can parse the data structure 400 to detect the presence of an empty value within a field of the data structure. Responsive to the detection of the empty value, the matrix processor 114 can generate a flag to indicate the presence of a placeholder or erroneous value. The flag can be a binary value, an indicator, a modification, among other flags. While parsing, the matrix processor 114 can read the value associated with the field of the data structure. If the matrix processor 114 detects that there is a NULL value, an empty value, stale value, or a temporary value in the field, the matrix processor 114 can detect that the respective field corresponds to the placeholder. For example, a data structure can include a first field that includes a value corresponding to an hourly wage, a second field corresponding to an hourly wage, and a third field corresponding to an hourly wage. If the first field of the data structure and the second field of the data structure include a value for the hourly wage and the third field does not, the matrix processor 114 can detect that the third field includes an empty value and generate a flag at the field indicating that the value corresponding to the field is a placeholder.

The template extractor 126 can iterate through a plurality of templates 138 within the database 110. Each template 138 of the plurality of templates can include a plurality of reference matrices that include a similar format to the received data structure. As the template extractor 126 iterates through the plurality of templates 138, the template extractor 126 can identify a reference data structure that corresponds to the received data structure. To identify the reference data structure, the template extractor 126 can use each of the populated fields within the data structure to generate search criteria for the reference data structure within the database 110. The search criteria can be, for example, values of fields within the received data structure, deduction codes, information associated with the entity, the type of resources, among other search criteria.

Using the search criteria, the template extractor 126 can generate a search threshold such that templates 138 within the database 110 must satisfy the search threshold to be identified as the reference data structure. For example, the received data structure can include fields that map or include information associated with an hourly wage. The template extractor 126 can identify the search criteria as the hourly wage and generate a search threshold based on the hourly wage. For each template 138 within the database 110, the template extractor 126 can identify templates 138 that satisfy the search threshold by including the hourly wage. From here, the template extractor 126 can generate a subset of templates 138 that each satisfy the search threshold. In some embodiments, The template extractor 126 can select, identify, or otherwise, choose a template 138 based on which template includes a format for the values which is similar to the received data structure. In this manner, the template extractor 126 can select the reference data structure (e.g., template 138) from a smaller subset of templates, further improving processing time and reducing the amount of data to be processed.

To fill the placeholders, the template extractor 126 can receive or extract a template 138 from the database 110. The template 138 can include the plurality of reference matrices corresponding to the company associated with the electronic data source 104. Each reference data structure within the template 138 can include reference fields that correspond to the received data structure 400 from the electronic data source 104. For example, the reference data structure can include reference fields such as pre-tax benefits, pot-tax benefits, hourly wage, salary, dental benefits, among others. In another example, the template can include a first reference data structure corresponding to a first electronic data source 104, a second reference data structure corresponding to a second electronic data source, and a third reference data structure corresponding to a third electronic data source 104. Each reference data structure can exclude placeholders and include reference codes 140. The reference codes 140 can be mapped to the type of resource 136 corresponding to the placeholder. For example, in the data structure 400, the value filed can be empty, however a reference data structure in the template 138 can include a value of $400 as the reference code 140.

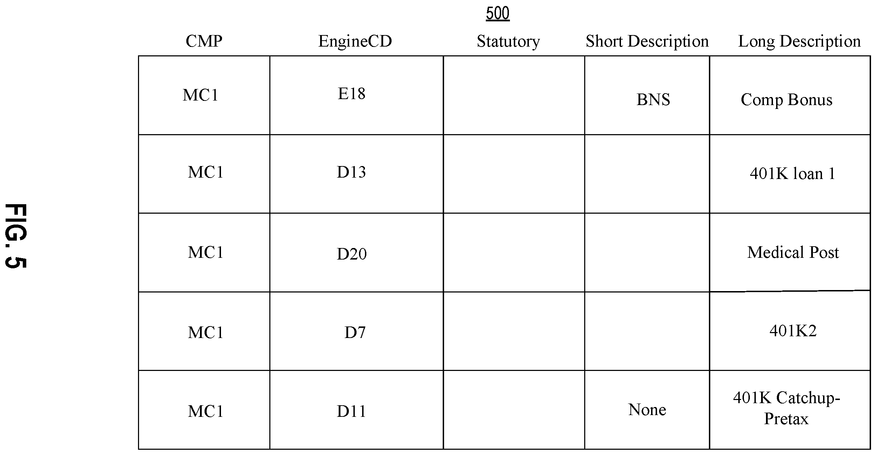

FIG. 5 is an illustrative example of a data structure 500 with data based on the template 138. The template 138 can include a plurality of fields that are completed and include the reference codes for a received data structure 400. The templates 138 can include a plurality of matrices and data structure 500 can be one data structure shown by example. The template extractor 126 can iteratively select the data structure that include reference codes 140 that correspond to the received data structure by comparing the fields of the received data structure and the fields of the data structure 500 against a threshold. From here, when the data structure 500 exceeds the threshold, the template extractor 126 can compare each data structure 500 within the template to determine at least one data structure 500 with the highest delta from the threshold.

Upon reception of the template 138, the placeholder classifier 130 can classify each placeholder within the data structure. For example, the placeholder classifier 130 can assign a flag, an indicator, or a value to each empty value, thereby classifying the placeholder as incomplete, invalid, or undefined. From here, the placeholder classifier 130 can parse the reference codes 140 of the template 138 and trigger the value processor 128 to predict values that can fill the placeholder. Each predicted value can be associated with the type of resource 136 for the segment of entities. For example, the predicted value can indicate that the placeholder is a dollar amount. In another example, the predicted value can indicate that the placeholder is a percentage. In yet another example, the predicted value can indicate that the placeholder is a collection of alphanumerical values.

To classify the placeholders, the placeholder classifier 130 can identify one or more factors for each placeholder in the plurality of placeholders. The factors can include the types of resources 136, a type of data associated with each entity, an importance for the type of the data. Using the factors, the placeholder classifier 130 can assign the flag, indicator, or value to the placeholder of the data structure. For example, the placeholder classifier 130 can assign the flag to placeholders that have high importance within the data structure. In another example, the placeholder classifier 130 can identify that the type of resource 136 corresponds to a tax benefit.

Once each placeholder within the data structure 400 is classified, the protocol executer 132 can execute a protocol on each classified placeholder of the data structure 400. The protocol can be computer code, an algorithm, a formula, a process, among others, executable by a command of trigger from the protocol executer 132. For example, the protocol executer 132 can trigger the computer code to execute for each classified placeholder. The protocol can be an input to a search engine to perform an edit distance search, multi-value search, a reverse search, among others. For example, the protocol can cause the search engine to perform a reverse search within the electronic data source 104 for the classified placeholder. During execution, the protocol executer 132 can extract instructions from the protocol to execute a search engine. The instructions from the protocol can identify a target state and a source state using a plurality of payroll engines, electronic data sources 104, and taxonomies. For example, the instructions of the protocol can identify a first placeholder as the target state and a payroll engine of an entity as the source state. Therefore, the search engine can perform a reverse search using the target state and the source state.

Using the search engine can cause the data processing system 102 to access a payroll engine associated with the electronic data source 104. In some instances, the data processing system 102 can provide access credentials to the electronic data source 104 prior to using the search engine. The access credential can be a token (e.g., session token, API token, Refresh token, SAML token), an identifier (e.g., device ID, client ID), SSH Key, access codes, among other access credentials. In some instances, the electronic data source 104 can register with the data processing system 102 to participate in the data migration by using the dashboard interface. At registration, the data processing system 102 can obtain information associated with the matrices provided (e.g., type of data, type of resources). Upon successful registration, the protocol executer 132 can execute a protocol to generate the authentication credentials. For example, the protocol executer 132 can execute the protocol to generate a public key for the data processing system 102 and transmit the corresponding private key to the electronic data source 104. From here, the data processing system 102 can provide the public key to access the payroll engine.

While accessing the payroll engine, the matrix processor 114 can provide a stream of data (e.g., Eng|Val). The stream of data can be representative of employment information (e.g., location of employment, home address, wages, bank information, etc.). The stream of data can be provided in groups or as singular data point. It should be recognized that the stream of data can be used for hundreds, if not thousands, of employees at a time, representing a very long chain of data. The matrix processor 114 can use the communications unit 112 to provide the stream of data to the electronic data source 104. The matrix processor 114 can identify or generate the stream of data based on the received data structure, the templates 138, or the reference codes. The stream of data can be personalized for each electronic data source 104 based on the information in the received data structure.

The electronic data source 104 can use the stream of data to provide access to the data processing system 102. Once access is provided, the data processing system 102 can identify actual values for the placeholders using the predicted values. To identify the actual values, the matrix processor 114 can search the payroll engine for the respective entity associated that includes the placeholder associated with the type of resource 136. For example, the matrix processor 114 can access the payroll engine to identify the employee "John Smith" that includes a placeholder for a percentage of the pre-tax benefit indicated by the predicted value. In another example, the matrix processor 114 can access the payroll engine to identify the employee "Jane Doe" that includes a placeholder for a dollar amount for salary indicated by the predicted value. From here, the matrix processor 114 can determine that the salary for Jane Doe is $72,000 from the payroll engine of the electronic data source 104. In this manner, the data processing system 102 can access the payroll engine associated with the electronic data source 104 to identify actual values that can remove the errors (e.g., placeholders) within the data structure.

Once the matrix processor 114 identifies the actual values, the matrix processor 114 can trigger the electronic data source 104 to transmit the actual value to the data processing system 102. This can be achieved by the matrix processor 114 by submitting a request for the actual value. The request can specify the actual value, the company associated with the system 100, access credentials, among others, to allow the electronic data source 104 to transmit the actual values. Upon approval of the request, the electronic data source 104 can transmit the actual values to the communications unit 112 of the data processing system 102. The communication unit 112 can provide the value processor 128 with the actual values.

The value processor 128 can map the predicted values of the placeholder to the actual values for the placeholder. By mapping the predicted values to the actual values, the value processor 128 can populate each placeholder with the actual values in accordance with the predicted values. For example, the value processor 128 can receive the actual value that indicates the salary of "Jane Doe," thereby replacing the empty placeholder with the salary of "Jane Doe." In another example, the value processor 128 can replace each empty placeholder in the plurality of placeholders within the data structure with a plurality of actual values. Each actual value can correspond to a post-tax benefit of one or more entities in the segment of entities.

The matrix processor 114 can parse the data structure upon completion of mapping the predicted values to the actual values. While parsing, the matrix processor 114 can iterate through each field of the data structure to detect placeholders within the data structure. Responsive to detecting placeholders within the data structure, the matrix processor 114 can iteratively execute the above described process until each placeholder includes the actual values. For example, the matrix processor 114 can trigger the protocol executer 132 to execute the protocol on each classified placeholder, responsive to detecting one or more placeholders after mapping the predicted values to the actual values. Using the technical solution described above, a system can correct any matrices that can include errors, missing values, or invalid data and reduce consumption of computing resources by processing erroneous matrices.

The matrix processor 114 can trigger the interface provider 124 to generate a user interface for presentation on the computing device 106. The user interface can display a dashboard that includes the data structure for display to an administrator of the computing device 106. For example, the interface provider 124 can generate and present an application on the computing device 106 using one or more user interface elements of the user interface of the computing device 106. In another example, the interface provider 124 can generate and display a web application using one or more user interface elements of the user interface on the computing device 106.

The administrator of the computing device 106 can interact with the user interface to generate a response to the data structure. The response can include one or more references values for the plurality of placeholders. The one or more reference values can be different from the actual values. In some instances, the one or more reference values can be the same as the actual values. The reference values can update the one or more actual values within the plurality of placeholders. For example, the payroll engine associated with the electronic data source 104 may not include the most up to date actual values. Therefore, the administrator of the computing device 106 can update the actual values to be the reference values ensuring the data structure includes the most up to data values. From here, the computing device can transmit the respond to the data processing system 102, thereby, allowing the matrix processor 114 to receive the response and update the data structure accordingly, prior to transmitting the data structure to the migration system 108.

Over time, the matrix processor 114 can detect that one or more actual values were replaced by the reference values at various time periods for the same data structure. For example, the matrix processor 114 can detect a data structure the includes one or more actual values overridden by reference values during one or more time periods. Based on the detection, the matrix processor 114 can determine a pattern for the actual values replaced by the reference values. The patterns can indicate actual values that are continuously overridden by reference values. When the pattern is determined, the matrix processor 114 can signify an error with the values within the payroll engine. The error within the payroll engine can indicate that employees are not receiving a proper salary, proper benefits, proper hourly wage, among others. From here, the matrix processor 114 can transmit the pattern and the error to the computing device 106.

In some embodiments, the matrix processor 114 can automatically generate, identify, or otherwise determine the reference values for the actual values by leveraging at least one of a cache database or artificial intelligence. The cache database can temporarily store or maintain frequently used reference values, actual values, and templates. The cache database can store data in volatile memory that optimizes read and write access speed for the reference values, actual values, and templates. In this manner, upon reception of a data structure, the matrix processor 114 can access the cache database to identify the actual values for each of the placeholders within the data structure, thereby avoiding the need to access the payroll engine of the electronic data source 104. In some instances, the matrix processor 114 can identify the reference values from the cache database without identifying the actual values.

In some embodiments, the matrix processor 114 can execute an artificial intelligence model that is trained to identify reference values based on receiving the actual values as an input. In response to the matrix processor 114 receiving the actual values, the matrix processor 114 can provide the actual values to the artificial intelligence model and execute the artificial intelligence model. Upon successful execution of the artificial intelligence model, the matrix processor can obtain the reference values for the actual value from the output of the artificial intelligence model. In some cases, the reference values will be the same as the actual values. In some cases, the reference values will be different from the actual values.

The matrix processor can continuously execute the above steps until the data structure no longer includes at least one placeholder. Once the matrix processor 114 does not detect any placeholders within the data structure, the matrix processor 114 can trigger the communications unit to transmit the data structure without any placeholders to the migration system 108. For example, when the data structure does not include any invalid values, the communications unit 112 can transmit the data structure to the migration system 108 to complete the registration of the new client associated with the electronic data source 104. Furthermore, the matrix processor 114 can transmit the data structure to the database 110 for future review by administrators of the computing device 106.

The migration system 108 can provide an indication to the matrix processor 114. The indication can identify that the data structure was accepted or denied for processing. The acceptance of the data structure can indicate that each placeholder was successfully mapped to a reference value or an actual value such that the format of the data structure is standardized for the electronic data source 104 and the migration system. The denial of the data structure can indicate that at least one reference value or actual value is incomplete or erroneous within the data structure. In response to an indication of denial, the matrix processor can further provide the data structure to the administrator of the computing device 106 for review or execute each of the functionality described herein to resolve the issue with the actual value.

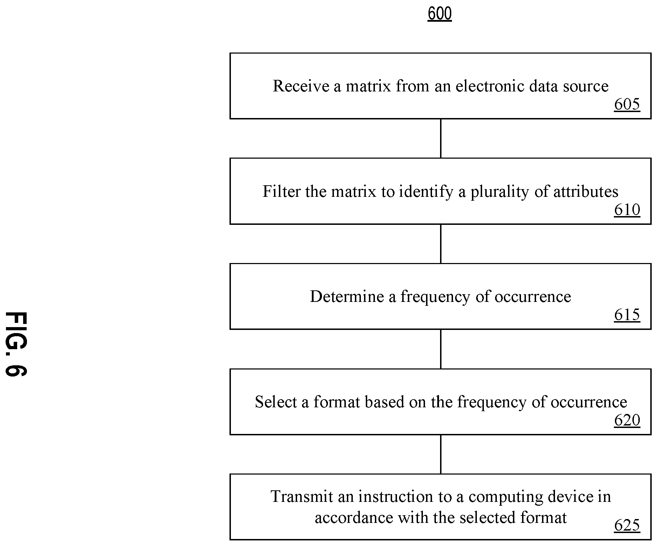

FIG. 6 is an illustrative example of a method 600 for standardization of code. The method 600 can be performed by, using, or for a system 100 or a data processing system 102. The method 600 can include receiving a data structure from an electronic data source at ACT 605. The method can include filtering the data structure to identify a plurality of attributes at ACT 610. The method 600 can include determining a frequency of occurrence for a first attribute and a frequency of occurrence for a second attribute of the plurality of attributes at ACT 615. The method 600 can include selecting a format based on the frequency of occurrence for a first attribute being higher than the frequency of occurrence for the second attribute at ACT 620. The method 600 can include transmitting an instruction to a computing device in accordance with the selected format for the first attribute at ACT 625.

The method 600 can include receiving a data structure from an electronic data source at ACT 605. The data structure can include a segment of entities that receive and transmit a plurality of resources. From the segment of entities, the data processing system can determine a subset of entities that include a plurality of attributes which satisfy a relevance threshold. Each entity on the segment of entities can correspond to at least one of employees, workers, experts, and clients.

The method can include filtering the data structure to identify a plurality of attributes at ACT 610. The data processing system can identify the plurality of attributes from the segment of entities. Each of the attribute can indicate a format used by a computing device to identify a type of resource associated with an entity of the segment of entities. Each attribute of the plurality of attributes can correspond to at least one of a post-tax benefit, a pre-tax benefit, a tax fringe benefit, an autopay, and a payroll hierarchy. The data processing system can parse the data structure to obtain the segment of entities, the plurality of attributes of each entity in the segment of entities, and a frequency of occurrences of each attribute of the plurality of attributes

The method 600 can include determining a frequency of occurrence for a first attribute and a frequency of occurrence for a second attribute of the plurality of attributes at ACT 615. The frequency of occurrence can correspond to the number of occurrences of an attribute within the data structure.

The method 600 can include selecting a format based on the frequency of occurrence for a first attribute being higher than the frequency of occurrence for the second attribute at ACT 620. If the frequency of occurrence of the first attribute is greater than the second frequency of occurrences of the second attribute, the data processing system can remove the second attribute from the respective entity. If the frequency of occurrence of the first attribute is less than the second frequency of occurrences of the second attribute, the data processing system can remove the first attribute from the respective entity. The data processing system can perform the comparison between each attribute in the plurality of attributes (e.g., first attribute and third attribute, second attribute and fifth attribute, etc.).

The method 600 can include transmitting an instruction to a computing device in accordance with the selected format for the first attribute at ACT 625. The instruction can cause the computing device to electronically transmit the type of resource in accordance with the format for the first attribute of the entity. The data processing system can generate a data structure comprising one or more fields, a first field to maintain the entity, a second field to maintain a list of the plurality of attributes of the entity, and a third field to maintain the frequency of occurrences for each attribute in the plurality of attributes in the list. The data processing system can transmit the data structure to the computing device. The data processing system can generate a report that includes an updated data structure including the selected format for the first attribute for each entity in the segment of entities. The updated data structure can be different from the data structure.

The data processing system can transmit the report to the computing device. The data processing system can generate a dashboard interface for presentation at the electronic data source. The data processing system can receive a request from the electronic data source through the dashboard interface. The request can include the instructions for the computing device. The data processing system can execute, using the instructions, a protocol to filter the data structure in accordance with the request. The data processing system can parse each entity in the segment of entities of the data structure to detect the plurality of attributes associated with each entity.

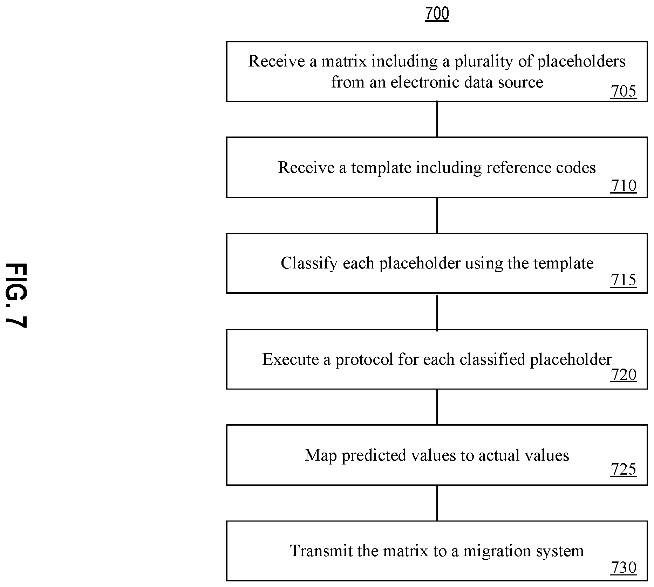

FIG. 7 is an illustrative example of a method of correction of the data structure. The method 700 can be performed by, using, or for a system 100 or a data processing system 102. The method 700 can include receiving a data structure including a plurality of placeholders from an electronic data source at ACT 705. The method can include receiving a template including reference codes at ACT 710. The method 700 can include classifying each placeholder using the template at ACT 715. The method 700 can include executing a protocol for each classified placeholder at ACT 720. The method 700 can include mapping predicted values to actual values at ACT 725. The method 700 can include transmitting the data structure to a migration system at ACT 730.

The method 700 can include receiving a data structure including a plurality of placeholders from an electronic data source at ACT 705. The data processing system can receive the data structure from a segment of entities associated with the electronic data source. Each of the placeholders can indicate a type of resource that can be electronically transmitted to each segment of entities or to the segment of entities. The data processing system can parse the data structure to detect the plurality of placeholders within the segment of entities.

The method can include receiving a template including reference codes at ACT 710. The data processing system can receive the template from a database. The data processing system can parse a plurality of templates within the database to identify at least one template that include a second data structure that corresponds to the received data structure. The data processing system can receive the template from a computing system. The template can include reference codes which are mapped to the type of resource defined by the placeholder within the data structure. Each reference code can be mapped to a type of resource, such that no duplicate reference codes exist within the system 100.

The method 700 can include classifying each placeholder using the template at ACT 715. The data processing system can use the reference codes within the template to classify each placeholder. The data processing system can parse the reference codes to identify predicted values associated with the type of resources for an entity or the segment of entities. The data processing system can identify factors to classify each placeholder. The factors can include the types of resources, a type of data associated with each entity in the segment of entities, and an importance of the type of data.

The method 700 can include executing a protocol for each classified placeholder at ACT 720. The protocol can cause a computing system to access a payroll engine of the electronic data source to identify actual values based on the predicted values. The payroll engine can be external to the system 100 and internal to at least one entity of the segment of entities. To access the payroll engine, the data processing system can transmit a request to the electronic data source. The request can include authorization credentials (e.g., login information, passcodes, biometric information) to access the payroll engine. The reception of the request can cause the computing system to verify the authorization credentials and provide access to the payroll engine to identify the actual values based on the predicted values.

The data processing system can extract instructions from the protocol to execute a search engine of the computing system. The data processing system can access, using the search engine of the computing system, the payroll engine of the electronic data source to identify the actual values based on the predicted values. The data processing system can transmit the data structure to a user interface of the computing device.

The method 700 can include mapping predicted values to actual values at ACT 725. The data processing system can use the mappings to populate the plurality of placeholders with the actual values. The data processing system can receive a response from the user interface of the computing device. The response can include a plurality of reference values for each of the plurality of placeholders. Using the reference values, the data processing system can map the actual values to the reference values to replace the actual values with the reference values. Based on the mappings, the data processing system can determine or identify patterns for the actual values replaced by the reference values. The patterns can correspond to a format of each reference value or the location of the placeholders within the data structure. Prior to transmitting the data structure to the migration system, the data processing system can transmit the patterns to the computing device for review. The data processing system can detect the plurality of placeholders within the data structure, responsive to mapping the predicted values to the actual values. If placeholders are detected within the data structure, the method 700 can return to ACT 710.

The method 700 can include transmitting the data structure to a migration system at ACT 730. The migration system can be an external system to integrate payroll data associated with computing devices. The transmission of the data structure can allow the migration system to access the contents of the data structure without the inclusion of placeholders, thereby completing the data structure.

An aspect of technical solutions described herein can be directed to a system for data classification. The system can include one or more processors coupled with memory. The one or more processors can receive a data structure from a segment of entities of an electronic data source for use by a migration system, the data structure including a plurality of placeholders. Each placeholder in the plurality of placeholders can indicate types of resources electronically transmitted to the segment of entities. The one or more processors can receive a template including reference codes mapped to the types of resources of the placeholder of a computing system. The one or more processors can classify, using the template, each placeholder in the plurality of placeholders in the data structure by parsing the reference codes to identify predicted values associated with the types of resources for the segment of entities. The one or more processors can execute a protocol for each classified placeholder in the data structure. The protocol can cause the computing system to access a payroll engine of the electronic data source to identify actual values based on the predicted values. The one or more processors can map the predicted values to the actual values to populate the plurality of placeholders with the actual values. The one or more processors can transmit the data structure to the migration system.

The one or more processors can parse the data structure to detect the plurality of placeholders within the segment of entities of the data structure, prior to mapping the predicted values to the actual values. The one or more processors can transmit the data structure to a user interface of a computing device. The one or more processors can receive a response from the user interface of the computing device. The response can include reference values for the plurality of placeholders of the data structure. The one or more processors can map the actual values to the reference values to replace the actual values with the reference values, prior to transmitting the data structure to the migration system. The one or more processors can determine patterns for the actual values replaced by the reference values. The one or more processors can transmit the patterns to the computing device.

The one or more processors can identify factors to classify each placeholder in the plurality of placeholders. The factors can include at least one of the types of resources, a type of data associated with each entity in the segment of entities, and an importance of the type of data. The one or more processors can extract instructions from the protocol to execute a search engine of the computing system. The one or more processors can access, using the search engine of the computing system, the payroll engine of the electronic data source to identify the actual values based on the predicted values. The one or more processors can transmit the data structure to a database electrically coupled with a computing device. The one or more processors can parse a plurality of templates within a database to identify the template of the plurality of templates that includes a second data structure. The second data structure can correspond to the data structure.

The one or more processors can parse the data structure to detect the plurality of placeholders within the segment of entities of the data structure, responsive to mapping the predicted values to the actual values. The predicted values can be mapped to the actual values at the computing system. The one or more processors can transmit a request to the electronic data source to access the payroll engine. The one or more processors can access the payroll engine of the electronic data source, responsive to receiving a response to the request.

An aspect technical solutions described herein can be directed to a method for data classification. The method can be performed by one or more processors, coupled with memory. The method can include receiving a data structure from a segment of entities of an electronic data source for use by a migration system. The data structure can include a plurality of placeholders. Each placeholder in the plurality of placeholders indicating types of resources electronically transmitted to the segment of entities. The method can include receiving a template including reference codes mapped to the type of resources of the placeholder of a computing system. The method can include classifying, using the template. Each placeholder in the plurality of placeholders in the data structure by parsing the reference codes to identify predicted values associated with the types of resources for the segment of entities. The method can include executing a protocol for each classified placeholder in the data structure, the protocol causing the computing system to access a payroll engine of the electronic data source to identify actual values based on the predicted values. The method can include mapping the predicted values to the actual values to populate the plurality of placeholders with the actual values. The method can include transmitting the data structure to the migration system.

An aspect technical solutions described herein can be directed to a non-transitory computer readable storage medium that stores processor-executable instructions that, when executed by one or more processors, cause the one or more processors to receive a data structure from a segment of entities of an electronic data source for use by a migration system, the data structure including a plurality of placeholders. Each placeholder in the plurality of placeholders can indicate types of resources electronically transmitted to the segment of entities. The one or more processors can receive a template including reference codes mapped to the types of resources of the placeholder of a computing system. The one or more processors can classify, using the template, each placeholder in the plurality of placeholders in the data structure by parsing the reference codes to identify predicted values associated with the types of resources for the segment of entities. The one or more processors can execute a protocol for each classified placeholder in the data structure. The protocol can cause the computing system to access a payroll engine of the electronic data source to identify actual values based on the predicted values. The one or more processors can map the predicted values to the actual values to populate the plurality of placeholders with the actual values. The one or more processors can transmit the data structure to the migration system.

The foregoing examples have been provided merely for the purpose of explanation and are in no way to be construed as limiting of the present technology. While aspects of the present technology have been described with reference to an exemplary embodiment, it is understood that the words which have been used herein are words of description and illustration, rather than words of limitation. Changes may be made, within the purview of the appended claims, as presently stated and as amended, without departing from the scope and spirit of the present description in its aspects. Although aspects of the present technology have been described herein with reference to particular means, materials and embodiments, the present technology is not intended to be limited to the particulars described herein; rather, the present technology and description extends to all functionally equivalent structures, methods and uses, such as are within the scope of the appended claims.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B‴ can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the disclosed elements and operations without departing from the scope of the present description.

## Claims

1. A system, comprising:
one or more processors, coupled with memory, arranged to:
receive, from an electronic data source, data structure a segment of entities to which resources are electronically transmitted;
identify a plurality of attributes of the segment of entities by using a filter on the data structure, each attribute of the plurality of attributes that is filtered indicates a format used by a computing device to identify a type of resource associated with an entity of the segment of entities;
determine a first frequency of occurrences of a first attribute of the plurality of attributes for the entity in the segment of entities and a second frequency of occurrences of a second attribute of the plurality of attributes for the entity in the segment of entities;
select the format for the first attribute of the entity, based on a determination that the first frequency of occurrences of the first attribute being greater than the second frequency of occurrences of the second attribute; and
transmit, responsive to the selection of the format for the first attribute of the entity, an instruction to the computing device to cause the computing device to electronically transmit the type of resource in accordance with the format for the first attribute of the entity.

2. The system of claim 1, wherein the one or more processors further:
determine that the first frequency of occurrences of the first attribute is greater than the second frequency of occurrences of the second attribute; and
remove the second attribute of the entity, responsive to the first frequency of occurrences of the first attribute being greater than the second frequency of occurrences of the second attribute.

3. The system of claim 1 or 2, wherein the one or more processors further:
identify the plurality of attributes from the segment of entities to determine a third frequency of occurrences of a third attribute for the entity in the segment of entities by using the filter; and
select the format for the first attribute of the entity, based on a determination that the first frequency of occurrences of the first attribute is greater than the third frequency of occurrences of the third attribute.

4. The system of any preceding claim, wherein to identify the plurality of attributes, the one or more processors further:
determine a subset of entities of the segment of entities within the data structure, each subset of entities including the plurality of attributes satisfying a relevance threshold;
determine a third frequency of occurrences of a third attribute for the subset of entities and a fourth frequency of occurrences of a fourth attribute for the subset of entities; and
select the format for the third attribute of the subset of entities, based on a determination that the third frequency of occurrences of the third attribute is greater than the fourth frequency of occurrences of the fourth attribute.

5. The system of any preceding claim, wherein the one or more processors further:
parse the data structure to obtain the segment of entities, the plurality of attributes of each entity in the segment of entities, and a frequency of occurrences of each attribute of the plurality of attributes; and
generate a data structure comprising one or more fields, a first field to maintain the entity, a second field to maintain a list of the plurality of attributes of the entity, and a third field to maintain the frequency of occurrences for each attribute in the plurality of attributes in the list.

6. The system of any preceding claim, wherein to transmit the instruction, the one or more processors further:
generate a report comprising an updated data structure including the selected format for the first attribute for each entity in the segment of entities, the updated data structure different from the data structure; and
transmit the report to the computing device.

7. The system of any preceding claim, wherein the one or more processors further:
generate a dashboard interface for presentation at the electronic data source;
receive a request from the electronic data source through the dashboard interface, the request comprising instructions for the computing device; and
execute, using the instructions, a protocol to filter the data structure in accordance with the request.

8. The system of any preceding claim, wherein to filter the data structure, the one or more processors further:
parse each entity in the segment of entities of the data structure to detect the plurality of attributes associated with each entity, wherein each entity in the segment of entities corresponds to at least one of employees, workers, experts, and clients, wherein each attribute of the plurality of attributes corresponds to at least one of a post-tax benefit, a pre-tax benefit, a tax fringe benefit, an autopay, a payroll hierarchy.

9. A method, comprising:
receiving, by one or more processors coupled with memory, from an electronic data source, a data structure comprising a segment of entities to which resources are electronically transmitted;
filtering, by the one or more processors, the matrix to identify a plurality of attributes from the segment of entities, each attribute of the plurality of attributes indicating a format used by a computing device to identify a type of resource associated with an entity in the segment of entities;
determining, by the one or more processors, a first frequency of occurrences of a first attribute of the plurality of attributes for the entity in the segment of entities and a second frequency of occurrences of a second attribute of the plurality of attributes for the entity in the segment of entities;
selecting, by the one or more processors, the format for the first attribute of the entity, based on a determination that the first frequency of occurrences of the first attribute being greater than the second frequency of occurrences of the second attribute; and
transmitting, by the one or more processors, an instruction to the computing device, responsive to the selection of the format for the first attribute of the entity, the instruction causing the computing device to electronically transmit the type of resource in accordance with the format for the first attribute of the entity.

10. The method of claim 9, comprising:
removing, by the one or more processors, the second attribute of the entity, responsive to the first frequency of occurrences of the first attribute being greater than the second frequency of occurrences of the second attribute.

11. The method of claim 9 or 10, comprising:
identifying, by the one or more processors, the plurality of attributes from the segment of entities to determine a third frequency of occurrences of a third attribute for the entity in the segment of entities by parsing the data structure;
comparing, by the one or more processors, the first frequency of occurrences of the first attribute and the second frequency of occurrences of the second attribute; and
selecting, by the one or more processors, the format for the first attribute of the entity, responsive to the first frequency of occurrences of the first attribute being greater than the third frequency of occurrences of the third attribute.

12. The method of any of claims 9 to 11, wherein parsing the data structure to identify the plurality of attributes further comprises:
determining, by the one or more processors, a subset of entities of the segment of entities within the data structure, each subset of entities including the plurality of attributes satisfying a relevance threshold;
determining, by the one or more processors, a third frequency of occurrences of a third attribute for the subset of entities and a fourth frequency of occurrences of a fourth attribute for the subset of entities;
comparing, by the one or more processors, the third frequency of occurrences of the third attribute and the fourth frequency of occurrences of the fourth attribute; and
selecting, by the one or more processors, the format for the third attribute of the subset of entities, responsive to the third frequency of occurrences of the third attribute being greater than the fourth frequency of occurrences of the fourth attribute.

13. The method of any of claims 9 to 12, wherein each entity in the segment of entities comprises a plurality of alphanumeric values, wherein each attribute of the plurality of attributes corresponds to at least one of a post-tax benefit, a pre-tax benefit, a tax fringe benefit, an autopay, and a payroll hierarchy.

14. The method of any of claims 9 to 13, comprising:
parsing, by the one or more processors, the data structure to obtain the segment of entities, the plurality of attributes of each entity in the segment of entities, and a frequency of occurrences of each attribute of the plurality of attributes; and
generating, by the one or more processors, a data structure comprising one or more fields, a first field to maintain the entity, a second field to maintain a list of the plurality of attributes of the entity, and a third field to maintain the frequency of occurrences for each attribute of the plurality of attributes in the list.

15. A non-transitory computer readable medium storing processor executable instructions that, when executed by one or more processors, cause the one or more processors to carry out the method of any of claims 9 to 14.
